# EUROPÄISCHE PATENTANMELDUNG

(11) **EP 3 450 398 A1**
(43) Veröffentlichungstag der Anmeldung: **06.03.2019**
(21) Anmeldenummer: 18191419.3
(22) Anmeldetag: 29.08.2018
(51) Int. Cl.: C02F 1/00, C02F 1/66, A01K 63/04, C02F 103/20, C02F 101/16, C02F 1/68

(54) **VORRICHTUNG ZUR STABILISIERUNG DES PH-WERTS DES WASSERS BEI DER ZUCHT VON WASSERORGANISMEN IN ANLAGEN MIT GESCHLOSSENER WASSERVERSORGUNG**

(30) Priorität: 31.08.2017 RU 2017105867
(71) Anmelder: Kitashin, Oleg, 140003 Lubertsy (RU); Kitashin, Jurii, 140003 Lubertsy (RU); Dubrovin, Evgeny, 123056 Moskau (RU); Dubrovin, Dmitry, 140003 Lubertsy, Moskovskaya Obl (RU); Yakushev, Dmitry, 125222 Moskau (RU)
(72) Erfinder: Kitashin, Oleg, 140003 Lubertsy (RU); Kitashin, Jurii, 140003 Lubertsy (RU); Dubrovin, Evgeny, 123056 Moskau (RU); Dubrovin, Dmitry, 140003 Lubertsy, Moskovskaya Obl (RU); Yakushev, Dmitry, 125222 Moskau (RU)
(74) Vertreter: Jeck, Anton

(57) **Zusammenfassung**

Die Erfindung bezieht sich auf das Gebiet der Landeskultur und kann zur Verwendung in geschlossenen Wasserversorgungsanlagen verwendet werden, die für die Züchtung von Wasserorganismen bestimmt sind. Die vorliegende Vorrichtung besteht aus einer Einheit für die Niveauautomatik und Programmsteuerung, die einen IBM-kompatiblen Computer mit dem darauf installierten Computerprogramm für EDV "Das Programm für Steuerung von Wasserparametern im USV" enthält, aus einer Einheit für eine trockene sodahaltige Substanz, aus einem Förderer, aus einer Umwälzpumpe, aus der Einheit zur Lösung der sodahaltigen Substanz, aus einem Belüftungskanal, aus einer siebenten Einheit für das Wassersediment, aus einer achten Einheit zur Wasserableitung mit einer pH-Konzentration von mehr als 7,8, aus einer neunten Einheit für das Wassersediment, aus einer zehnten Einheit für die Wasserversorgung mit einer pH-Konzentration von weniger als 7,05, aus einer elften Einheit für die Sedimentfraktionsentfernung, aus einer zwölften Einheit für die Sedimentfraktionsbewegung, aus einem ersten Verschluss und aus einem zweiten Verschluss, wobei die Einheiten der Vorrichtung mit Informationsschalteingängen und -ausgängen ausgestattet und auch durch Rohrleitungen miteinander verbunden sind. Die erste Einheit für die Niveauautomatik und Programmsteuerung hat drei Informationsschalteingänge und vier Informationsschaltausgänge. Die zweite Einheit für die trockene sodahaltige Substanz ist mit zwei Informationsschalteingängen und mit einem Ausgang ausgestattet. Der Förderer ist mit einem Eingang, einem Ausgang und einem Informationsschalteingang ausgestattet. Die Umwälzpumpe ist mit einem Eingang, einem Ausgang und einem Informationsschalteingang ausgestattet. Die fünfte Einheit zur Lösung der sodahaltigen Substanz weist drei Eingänge, zwei Ausgänge und einen Informationsschalteingang auf. Der Belüftungskanal enthält einen Eingang, einen Ausgang und einen Informationsschalteingang. Die siebente Einheit für das Wassersediment ist mit einem Eingang, zwei Ausgängen und einem Informationsschaltausgang ausgestattet. Die achte Einheit für die Wasserableitung mit einer pH-Konzentration von mehr als 7,8 hat einen Eingang, einen Ausgang und einen Informationsschaltausgang. Die siebente Einheit für das Wassersediment und die zehnte Einheit für die Wasserversorgung mit einer pH-Konzentration von weniger als 7,05 enthalten jeweils einen Eingang und einen Ausgang. Die neunte Einheit für das Wassersediment ist mit einem Informationsschaltausgang ausgestattet, und die Einheit ist mit einem Informationsschalteingang ausgestattet. Die elfte Einheit für die Sedimentfraktionsentfernung hat einen Eingang und einen Ausgang. Die zwölfte Einheit für die Sedimentfraktionsbewegung, der erste Verschluss und der zweite Verschluss sind jeweils mit einem Eingang, einem Ausgang und einem Informationsschalteingang ausgestattet.

Das technische Ergebnis der vorliegenden Vorrichtung ist die Verringerung des Verlustes an Wasserorganismen, wenn sie in geschlossenen Wasserversorgungsanlagen gezüchtet werden.

## Beschreibung

Die Erfindung betrifft eine Vorrichtung zur Stabilisierung des pH-Werts des Wassers bei der Zucht von Wasserorganismen in Anlagen mit geschlossener Wasserversorgung. Die Erfindung bezieht sich auf das Gebiet der Landeskultur und kann für Anwendungen in geschlossenen Wasserversorgungssystemen verwendet werden, die für die Zucht von Wasserorganismen bestimmt sind.

Ein Modul FTIE (www.permanet.ru) ist bekannt, das aus vier Fischbecken besteht. Jedes Becken hat ein Volumen von 15,7 m³, ein Trommelfilter für mechanische Reinigung des Wassers, einen Bioreaktor (Filter der biologischen Reinigung), einen Pumpensumpf, vorzugsweise bis zu vier Pumpen, insbesondere eine für die Kreislaufversorgung, eine für die Wasserlieferung in den Bioreaktor und eine Reservepumpe, ein Wassersättigungsystem mit Sauerstoff (Oxygenatortyp Oxytrans 700), eine Einrichtung zur ultravioletten Desinfektion, eine Aciditätstabilisierungseinrichtung (d. h. der pH-Wert des Wassers), ein elektronisches Lenksystem von USV mit Alarmanlage, das eine Stabilisierung des pH-Werts des Wassers in Anlagen der geschlossenen Wasserversorgung bereitstellt, die für die Zucht der Wasserorganismen verwendet wird. Der Nachteil dieses Analogon nach dem Stand der Technik besteht darin, dass das Abfallniveau (Todesfälle) der gezüchteten Wasserorganismen aufgrund der Ineffizienz der gegenwärtigen Stabilisierung des Wasser-pH-Werts in den Becken relativ hoch ist.

Die nach dem technischen Wesen und dem erreichbaren Ergebnis der vorliegenden Erfindung am nächsten kommende Vorrichtung zur Stabilisierung des Wasser-pH-Werts während der Zucht der Wasserorganismen ist eine Vorrichtung zur Steuerung der physikalisch-chemischen Parameter der wässrigen Umgebungen (AS USSR 1608626 vom 23.11.90, "Vorrichtung zur Steuerung der physikalisch-chemischen Parameter der wässrigen Umgebungen ", Bul. Nr. 43). Diese Vorrichtung zur Regelung der physikalisch-chemischen Parameter der wässrigen Umgebungen (z. B. pH-Wert) enthält einen Behälter für wässrige Umgebung, einen Messersensor, einen Sensor, einen Regler und ein Stellwerk, das aus Arbeits- und Hilfsspaltkammern mit Elektroden besteht, die durch eine poröse Membran getrennt und mit einer Versorgungquelle verbunden sind. Dabei ist die Elektrode der Arbeitskammer porös ausgeführt, und die Arbeitskammer ist mit einer Gastasche versehen, die in Abteilungen eingeteilt ist, wobei eine Seite der Arbeitskammer der porösen Membran zugewandt und mit porösen Elektronen geschlossen ist. Durch eine andere Seite sind die Abteilungen der Gastasche der Arbeitskammer mit Gasquellen verbunden.

Die oben genannte Vorrichtung wird als Prototyp angesehen. Der Nachteil dieses Prototyps zur Regelung und Stabilisierung des pH-Werts der wässrigen Umgebung im geschlossenen Wasserversorgungssystem (AGW) ist der hohe Abfall (Todesfälle) der Wasserorganismen während ihrer Zucht in geschlossenen Wasserversorgungs-anlagen.

Die Aufgabe der vorliegenden technischen Lösung ist im Wesentlichen, die Wirtschaftlichkeit der Zucht von Wasserorganismen im Lauf ihrer Zucht in geschlossenen Wasserversorgungs-anlagen zu erhöhen.

Das technische Ergebnis, das von der Verwendung der vorliegenden Vorrichtung erwartet wird, ist die Verringerung des Abfalls von Wasserorganismen, wenn sie in geschlossenen Wasserversorgungsanlagen gezüchtet werden.

Das technische Ergebnis wird dadurch erreicht, dass die vorliegende Vorrichtung zur Stabilisierung des Wasser-pH-Werts während der Zucht von Wasserorganismen in geschlossenen Wasserversorgungsanlagen folgende Einheiten aufweist (s. Figur):
- eine erste Einheit (1) für die Niveauautomatik und Programmsteuerung einschließlich eines IBM-kompatiblen Computers mit einem auf diesem installierten Computerprogramm für EDV "Programm zur Regelung von Wasserparametern in GWA", wobei diese erste Einheit (1) einen ersten, zweiten, dritten und vierten Informationsschaltausgang sowie einen ersten, zweiten und dritten Informationsschalteingang aufweist,
- eine zweite Einheit (2) für einen trockenen Sodastoff, der ein Ausgang sowie ein erster und zweiter Informationseingang zugeordnet sind,
- eine Fördereinheit (3), die einen Eingang, einen Ausgang und einen Informationsschalteingang aufweist,
- eine Umwälzpumpe 4 mit einem Eingang, einem Ausgang und einem Informationsschalteingang,
- eine Einheit (5) zur Lösung eines sodahaltigen Stoffs mit einem ersten, einem zweiten und einem dritten Eingang, einem Ausgang und einem Informationsschaltausgang,
- einen Belüftungskanal (6) mit einem Eingang, einem Ausgang und einem Informationsschaltausgang,
- eine siebente Einrichtung (7) für das Wassersediment mit einem ersten und zweiten Ausgang, einem Eingang und einem Informationsschaltausgang,
- eine achte Einheit (8) zur Wasserableitung mit einer pH-Konzentration von mehr als 7,8 und mit einem Eingang, einem Ausgang und einem Informationsschalteingang,
- eine neunte Einheit (9) für das Wassersediment mit einem Eingang, einem ersten und einem zweiten Ausgang und einem Informationsschaltausgang,
- eine zehnte Einheit (10) für die Wasserversorgung mit einer pH-Konzentration von weniger als 7,05 mit einem Eingang, einem Ausgang und einem Informationsschalteingang,
- eine elfte Einheit (11) zur Sedimententfernung mit einem Eingang und einem Ausgang,
- eine zwölfte Einheit (12) zur Sedimentfraktionsbewegung mit einem Eingang, einem Ausgang und einem Informationsschalteingang,
- einen ersten Verschluss (13) mit einem Eingang, einem Ausgang und einem Informationsschalteingang,
- einen zweiten Verschluss (14) mit einem Eingang, einem Ausgang und einem Informationsschalteingang
und dass dabei
- der erste Informationsschaltausgang der ersten Einheit (1) für die Niveauautomatik und Programmsteuerung mit den Informationsschalteingängen der Umwälzpumpe (4) der zwölften Einheit (12) zur Sedimentfraktionsbewegung des ersten Verschlusses (13) und des zweiten Verschlusses (14) verbunden ist,
- der zweite Informationsschaltausgang der ersten Einheit (1) für die Niveauautomatik und Programmsteuerung mit dem Informationsschalteingang des Förderers (3) verbunden ist,
- der dritte Informationsschaltausgang der ersten Einheit (1) für die Niveauautomatik und Programmsteuerung mit dem Informationsschalteingang der zweiten Einheit (2) für die trockene sodahaltige Substanz verbunden ist,
- der vierte Informationsschaltausgang der ersten Einheit (1) für die Niveauautomatik und Programmsteuerung mit den Informationsschalteingängen der achten Einheit (8) für die Wasserableitung mit einer pH-Konzentration von mehr als 7,8 und der zehnten Einheit (10) für die Wasserversorgung mit einer pH-Konzentration von weniger als 7,05 verbunden ist,
- der erste Informationsschalteingang der ersten Einheit (1) für die Niveauautomatik und Programmsteuerung mit dem Informationsschaltausgang des Belüftungskanals (6) verbunden ist,
- der zweite Informationsschalteingang der ersten Einheit (1) für die Niveauautomatik und Programmsteuerung mit den Informationsschaltausgängen der fünften Einheit (5) zur Lösung der sodahaltigen Substanz, der siebenten Einheit (7) für das Wassersediment und der neunten Einheit (9) für das Wassersediment verbunden ist,
- der dritte Informationsschalteingang der ersten Einheit (1) für die Niveauautomatik und Programmsteuerung mit dem Informationsschaltausgang der zweiten Einheit (2) für trockene Substanz verbunden ist,
- der Ausgang der zweiten Einheit (2) für trockene sodahaltige Substanz mit dem Eingang des Förderers (3) verbunden ist,
- der Ausgang des Förderers 3 mit dem ersten Eingang der fünften Einheit (5) zur Lösung der sodahaltigen Substanz verbunden ist,
- der zweite Eingang der fünften Einheit (5) zur Lösung der sodahaltigen Substanz mit dem Ausgang der Umwälzpumpe 4 verbunden ist,
- der dritte Eingang der fünften Einheit (5) zur Lösung der sodahaltigen Substanz mit dem Ausgang der zehnten Einheit (10) für die Wasserversorgung mit einer pH-Konzentration von weniger als 7,05 verbunden ist, deren Eingang mit dem Ausgang des Belüftungskanals (6) verbunden ist,
- der erste Ausgang der fünften Einheit (5) zur Lösung der sodahaltigen Substanz mit dem Eingang der Umwälzpumpe 4 verbunden ist und
- der zweite Ausgang der fünften Einheit (5) zur Lösung der sodahaltigen Substanz mit dem Eingang der neunten Einheit (9) für das Wassersediment verbunden ist, deren Ausgang mit dem Eingang der siebenten Einheit (7) für das Wassersediment verbunden ist,
- der erste Ausgang der siebenten Einheit (7) für das Wassersediment mit dem Eingang des ersten Verschlusses (13) verbunden ist,
- der zweite Ausgang der siebenten Einheit (7) für das Wassersediment mit dem Eingang der achten Einheit (8) zur Wasserableitung mit einer pH-Konzentration von mehr als 7,8 verbunden ist,
- und ihr Ausgang mit dem Eingang des Belüftungskanals 6 verbunden ist,
- der Ausgang des ersten Verschlusses (13) mit dem Eingang des zweiten Verschlusses (14) und dem Eingang der zwölften Einheit (12) zur Sedimentfraktionsbewegung verbunden ist,, deren Ausgang mit dem Eingang der elften Einheit (11) zur Sedimentfraktionsentfernung verbunden ist, während ihr Ausgang auf die Entsorgung gerichtet ist.

Um das Leben der Wasserorganismen in geschlossenen Wasserversorgungsanlagen (GWA) während ihrer Zucht zu gewährleisten, sind verschiedene Wasserreinigungsanlagen vorhanden. Eine der Hauptaufgaben der oben genannten Vorrichtung ist die Entfernung des Ammoniumstickstoffs aus dem Wasser. Als Hauptprodukt von Proteinen, das im Futter enthalten ist und von den Wasserorganismen assimiliert wird, bildet Ammoniumstickstoff eine große Gefahr für das Leben dieser Wasserorganismen. Daher ist die Konzentration von Ammoniumstickstoff im Becken einer der wichtigsten Parameter, die bei der Zucht der Wasserorganismen in GWA streng überwacht werden sollte.

Während der Entfernung des Ammoniumstickstoffs aus dem Wasser aufgrund der Aktivität von nitrifizierenden Bakterien in Biofiltern verschiebt sich der Wasser-pH-Wert konstant in Richtung auf das saure Medium. Es sollte angemerkt werden, dass gemäß experimentellen Daten eine erfolgreiche Zucht der Wasserorganismen nur bei pH-Werten des Wassers im Intervall von 7,0 bis 7,8 auftritt. Wenn der pH-Wert des Wassers weniger als 7,0 oder mehr als 7,8 beträgt, führt das zu Stress bei den gezüchteten Wasserorganismen. Der Stress in Wasserorganismen ist ein äußerst unerwünschtes Phänomen, weil es das Auftreten von Krankheiten in gestressten Wasserorganismen stimuliert und der Hauptgrund für ihren Abfall (Todesfälle) ist.

Der Ammoniumstickstoff wird im Becken für die Zucht der Wasserorganismen in zwei Formen - nicht ionisiert (Ammoniak) und ionisiert (Ammonium) - dargestellt. Ammoniak ist eine giftige Form von Ammoniumstickstoff, und sein Gehalt im Wasser sollte den Wert von 0,02 mg/l nicht überschreiten. Massensterben der Wasserorganismen wurde selbst bei einer Konzentration von Ammoniak im Wasser des Fischbeckens neben einem Wert von 0,05 mg/l beobachtet.

Die Korrektur des Wasser-pH-Werts wird gewöhnlich einmal am Tag durchgeführt, indem 10 - 12 % einer alkalischen Substanz dem Wasser zugegeben wird, bezogen auf die Menge an Futter, das den Wasserorganismen pro Tag gegeben wird. Die Einleitung einer solchen (10 - 12 %) Menge an alkalischer Substanz im Wasser führt zu Situationen, in denen die Konzentration von Ammoniak im Wasser für den Zeitraum von bis zu 10 Minuten nach dem Einbringen der alkalischen Substanz wesentlich höher ist als die zulässigen Werte (der pH-Wert des Wassers übersteigt dabei den akzeptablen Wert 0,4 - 1,5mal).

Der Anteil von Ammoniak im Wasser an der Gesamtmenge an Stickstoff hängt von der Temperatur und dem pH-Wert des Wassers ab. Eine ähnliche Abhängigkeit ist in der Tabelle 1 angegeben.

**Tabelle 1**

| pH | Wassertemperatur (°C) | | | | | | | |
|---|---|---|---|---|---|---|---|---|
| | 16 | 18 | 20 | 22 | 24 | 25 | 26 | 28 |
| 7,0 | 0,30 | 0,34 | 0,40 | 0,46 | 0,52 | 0,60 | 0,70 | 0,81 |
| 7,2 | 0,47 | 0,54 | 0,63 | 0,72 | 0,82 | 0,95 | 1,10 | 1,27 |
| 7,4 | 0,74 | 0,80 | 0,99 | 1,14 | 1,30 | 1,60 | 1,73 | 2,00 |
| 7,6 | 1,17 | 1,30 | 1,60 | 1,79 | 2,05 | 2,35 | 2,72 | 3,03 |
| 7,8 | 1,84 | 2,12 | 2,45 | 2,80 | 3,20 | 3,68 | 4,24 | 4,88 |
| 8,0 | 2,88 | 3,32 | 3,83 | 4,37 | 4,99 | 5,72 | 6,56 | 7,52 |
| 8,2 | 4,49 | 5,16 | 5,94 | 6,76 | 7,68 | 8,75 | 10,00 | 11,41 |

Aus der Tabelle 1 ist ersichtlich, dass die Ammoniakkonzentration im Bereich des Wassereingangs in den Becken mit Wasserorganismen 2,5 - 17mal höher ist als der aktuelle Wert, der 0,02 mg/l bei der Züchtung der Wasserorganismen nicht überschreiten sollte. Solche Art zeitlicher Disposition bezüglich der Ammoniakkonzentration in jedem Becken (4 - 8 % des Wasservolumens) mit Wasserorganismen dauert 1,5 bis 10 Minuten nach der Nahrungsaufnahme der Wasserorganismen. Hohe Ammoniakkonzentrationen im Wasser des Fischbeckens führen (zu allererst) zur chemischen Zerstörung der Kiemen von Wasserorganismen und zu einem wesentlichen Anstieg des Blutdrucks in ihrem System, was die Hauptursache für die Zerstörung eines Teils der Kapillargefäße im Kreislaufsystem von Wasserorganismen ist. Dabei kommt es bei einem Teil der Wasserorganismen in den Becken zu Vergiftungen unterschiedlichen Schweregrads. Einige Wasserorganismen erholen sich wieder, aber die meisten von ihnen sterben entweder sofort oder sind ernsthaft krank und sterben erst später (über einen langen Zeitraum). Da die Korrektur des Wasser-pH-Werts in Becken AGW während der Züchtung von Wasserorganismen täglich durchgeführt wird, wird der jährliche Abfall (Todesfall) von Fischen 2 - 4mal (12 % - 30 %) der durchschnittlichen Rate (7 % - 10 %) des Abfalls erhöht.

Die erste Einheit 1 für die Niveauautomatik und Programmsteuerung ist ein IBMkompatibler Computer (z. B. ein Personalcomputer) mit dem darauf installierten Programm für EDV (zusätzlich zum Betriebssystem) "Das Programm der Steuerung von Wasserparametern in AGW" (Zertifikat über die staatliche Registrierung des Computerprogramms für EDV Nr. 2016662750, veröffentlicht am 20. Dezember 2016).

Die zweite Einheit 2 für trockene sodahaltige Substanz enthält in ihrer Zusammensetzung einen Behälter, der aus Kunststoff, rostfreiem Stahl oder anodisiertem (galvanisiertem) Metall hergestellt sein kann, einen Schwimmersensor im Behälter für Sodafüllstand (zum Beispiel PCV/https:/ /www.drive.ru/1/), einen Flansch zum Verbinden der Antriebseinheit der Zuführspirale des Förderers 3 und zur versiegelten Abdeckung.

Der Förderer 3 enthält einerseits ein Abzweigrohr des Ausgangs für sodahaltige Substanz und andererseits die Antriebseinheit der Förderspirale und des Motors mit Reduktionsgetriebe. Der flexible Körper endet mit einem Entladungsmodul mit einer installierten Lagerstütze. Das Abzweigrohr der sodahaltigen Substanz des Entladungsmoduls ist mit einem Flansch zum Verbinden des Förderbands 3 mit einem Deckel der Einheit zur Lösung der sodahaltigen Substanz ausgestattet. Ein Beispiel eines Förderers kann eine flexible Schraube VK-GSH-50 AISI (www.tpribor.ru) sein.

Die Umwälzpumpe 4 ist ein Aggregat, das in geschlossenen Systemen betrieben wird. Ihre Pumpe und ihr Motor bilden eine Einheit ohne Gesichtsdichtung - diese Rolle übernehmen zwei Stopfbuchsen. Die Lagerflüssigkeit ist eine gepumpte Flüssigkeit. Die Umwälzpumpe 4 ist mit dem unteren Zweigrohr der Einheit verbunden, um die sodahaltige Substanz aufzulösen. Ihr Ausgang ist mit dem oberen Zweigrohr der Einheit verbunden, um die sodahaltige Substanz aufzulösen. Ein Beispiel für eine Version kann eine Zirkulationspumpe Grundfos UPS Model 25-80 (http://lunda/ru)/ sein.

Die Einheit 5 zur Lösung der sodahaltigen Substanz enthält in ihrer Zusammensetzung einen Behälter, der aus Kunststoff, Edelstahl oder anodisiertem (galvanisiertem) Metall hergestellt werden kann, ein unteres und ein oberes Abzweigrohr mit Flanschen zur Verbindung mit einer Kreislaufpumpe, ein Abzweigrohr der Wasserversorgungsleitung mit einem Flansch aus der Einheit für die Wasserversorgung mit einer Konzentration von pH-Werten von weniger als 7,05, ein Abzweigrohr mit einem Flansch zur Verbindung mit dem Eingang der siebenten Einheit 7 für das Wassersediment und einen Sensor des Wasser-pH-Werts (beispielsweise SensoLyt 700 IQ/www.ecoinstrument.ru/).

Die siebente Einheit 7 für das Wassersediment enthält in ihrer Zusammensetzung einen Behälter, der aus Kunststoff, Edelstahl oder anodisiertem (galvanisiertem) Metall hergestellt werden kann, ein unteres Abzweigrohr mit Flanschen zur Verbindung mit dem Ausgang der elften Einheit 11 für die Sedimentfraktionen, ein Abzweigrohr des Wassereingangs der achten Einheit 8 mit einer pH-Konzentration von mehr als 7,8, ein Abzweigrohr mit einem Flansch für die Verbindung mit dem Eingang der neunten Einheit 9 für das Wassersediment und einen Sedimentsensor (z. B. IFL 700/401 IQ/www.ecoinstrument.ru/). Die neunte Einheit 9 für das Wassersentiment enthält in ihrer Zusammensetzung einen Behälter, der aus Kunststoff, rostfreiem Stahl oder anodisiertem (galvanisiertem) Metall hergestellt werden kann, ein unteres Abzweigrohr mit Flanschen zur Verbindung mit der elften Einheit 11 für die Sedimententfernung, ein Abzweigrohr des Wassereingangs mit einer pH-Konzentration von mehr als 7,8, ein Abzweigrohr mit einem Flanschpunkt zum Anschluss an den Eingang der achten Einheit 8 für das Wassersediment mit einer pH-Konzentration von mehr als 7,8, einen Sedimentsensor (z. B. IFL 700/401IQ/www.ecoinstrument.ru/), einen Sensor des oberen Wasserstands und einen Sensor des unteren Wasserstands (als Variation kann ein Reed-Sensor verwendet werden, https: de.aliexpress.com./).

Die zehnte Einheit 10 für Wasserversorgung mit einer pH-Konzentration von weniger als 7,05 beinhaltet eine Tauchpumpe Typ GARDENA 4000/2 (https://market.yandex.ru), ein Rückschlagventil und ein Abzweigrohr der Wasserzuleitung in der Einheit zur Lösung der sodahaltigen Substanz.

Die Einheit für die Wasserableitung mit einer pH-Konzentration von mehr als 7,8 enthält in ihrer Zusammensetzung eine Umwälzpumpe Typ Grundfos UPS 25-80 (https://www.sushika.net) und ein Abzweigrohr der Wasserableitung in den Belüftungskanal AGW.

Die Einheit für die Sedimentfraktionsbewegung enthält eine Pumpe Typ Umwälzpumpe Grundfos UPS Modell 25-40 und Abzweigrohre.

Die Einheit für die Sedimentfraktionen enthält ein Rohrleitungsnetz zur Entfernung der Sedimentfraktionen (Entsorgung).

Der AGW-Belüftungskanal enthält in seiner Zusammensetzung einen Sensor des pH-Wassers (alternativ SensoLyt 700 IQ/www.ecoinstrument.ru /), einen Sensor des oberen und des unteren Wasserstands (optional Reed-Sensor /http://atries.ru/).

Der erste Verschluss 13 und der zweite Verschluss 14 sind solenoidale Magnetventile vom Typ BMA-01 (www.zzu.ru).

Zunächst umfasst die Vorbereitung zum Betrieb der vorliegenden Stabilisierungsvorrichtung des pH-Wassers zur Züchtung der Wasserorganismen in geschlossenen Wasserversorgungsanlagen das Verfahren der Beladung der sodahaltigen Substanz in die Einheit für sodahaltige Substanz. Der Betriebsbeginn der vorliegenden Vorrichtung zur Stabilisierung des pH-Wassers bei gezüchteten Wasserorganismen in geschlossenen Wasserversorgungsanlagen führt zum Einschluss der ersten Einheit 1 für die Niveauautomatik und Programmsteuerung, die gemäß den Informationen über den Wert des Stands des Wasser-pH-Werts im Belüftungskanal 6, die in den ersten Informationsschalteingang der Einheit 1 für die Niveauautomatik und Programmsteuerung vom Informationsschaltausgang des Belüftungskanals 6 ankommt und nach Informationen über die Menge der sodahaltigen Substanz in der zweiten Einheit 2 für trockene sodahaltige Substanz (insbesondere Backpulver NaHCO3), die im dritten Informationsschalteingang der ersten Einheit 1 für die Niveauautomatik und Programmsteuerung ankommt, stellt folgende Befehlslösungen bereit:
- Wenn der Gehalt der sodahaltigen Substanz in der zweiten Einheit 2 für die trockene sodahaltige Substanz unter dem zulässigen Wert liegt, wird ein Befehl über die Notwendigkeit ihrer Vorladung erteilt. Das untere Niveau des zulässigen Werts der trockenen sodahaltigen Substanz in der zweiten Einheit 2 für die trockene sodahaltige Substanz wird von der Bedingung der Möglichkeit des normalen Betriebs von AGW innerhalb der nächsten 2 Stunden bestimmt.
- Wenn das Niveau des zulässigen Werts der trockenen sodahaltigen Substanz höher als der untere zulässige Wert in der zweiten Einheit 2 für die trockene sodahaltige Substanz ist und der pH-Wert des Wassers im Belüftungskanal 6 innerhalb der zulässigen Grenzen liegt, wird keine Steueraktion in der vorliegenden Vorrichtung durchgeführt.
- Bei einem Wasser-pH-Wert im Belüftungskanal 6 unter dem Grenzwerte und dem Niveau der sodahaltigen Substanz über dem unteren zulässigen Wert in der zweiten Einheit 2 für die trockene sodahaltige Substanz wird im Betrieb die zehnte Einheit 10 für die Wasserversorgung mit einer pH-Konzentration von weniger als 7,05 eingeschlossen, die vom Ausgang aus dem Belüftungskanal 6 über ihren Eingang und dann durch ihr Ausgangssignal beginnt, das Wasser zum dritten Eingang der fünften Einheit 5 zur Lösung der sodahaltigen Substanz zu liefern. Vom Ausgang der zweiten Einheit 2 für die trockene sodahaltige Substanz kommt die trockene sodahaltige Substanz in den Eingang des Förderers 3, die dieser von seinem Ausgang in den ersten Eingang der fünften Einheit 5 zur Lösung der sodahaltigen Substanz liefert. Die Umwälzpumpe 4 vom ersten Ausgang der fünften Einheit 5 zur Lösung der sodahaltigen Substanz nimmt durch ihren Eingang das Wasser mit der pH-Konzentration und Teile der sodahaltigen Substanz auf, und liefert dann durch ihren Ausgang die sich ergebende Mischung in den zweiten Eingang der fünften Einheit 5 zur Lösung der sodahaltigen Substanz. Während des beständigen Überpumpens des Wassers tritt eine schnelle Lösung der sodahaltigen Substanz in dem gepumpten Wasser auf. Gemäß dem Verlauf dieses Prozesses wird die Information über die Konzentration der sodahaltigen Substanz im Wasser immer von der fünften Einheit 5 zur Lösung der sodahaltigen Substanz über den Ausgang ihres Informationsschaltkanals in den zweiten Informationsschalteingang der ersten Einheit 1 für die Niveauautomatik und Programmsteuerung übertragen. Beim Erreichen der Konzentration der sodahaltigen Substanz von 10 % im Wasser in der fünften Einheit 5 zur Lösung der sodahaltigen Substanz wird auf den Informationsschalteingang des Förderers 3 vom zweiten Informationsschaltausgang der ersten Einheit 1 für die Niveauautomatik und Programmsteuerung ein Befehl übertragen, um ihn zu halten.
- Bei der Verdünnung der sodahaltigen Substanz im Wasser bis zu 8 % in der fünften Einheit 5 zur Lösung der sodahaltigen Substanz wird auf den Informationsschalteingang des Förderers 3 vom zweiten Informationsschaltausgang der ersten Einheit 1 für die Niveauautomatik und Programmsteuerung ein Befehl über ihre Betriebseinschaltung übertragen. In diesem Fall wird der Wasserfördervorgang mit einer niedrigen pH-Konzentration durch die zehnte Einheit 10 für die Wasserversorgung mit einer pH-Konzentration von weniger als 7,05 fortgesetzt. Das Wasser mit der hohen pH-Konzentration vom zweiten Ausgang der fünften Einheit 5 zur Lösung der sodahaltigen Substanz wird dem Eingang der neunten Einheit 9 für das Wassersediment zugeführt. Die neunte Einheit 9 für das Wassersediment bildet eine Pufferfunktion, um sowohl Hauptfraktionen der sodahaltigen Substanz, die sich nicht auflösten, als auch andere Fremdkörper (Fremdverunreinigungen) zu entfernen. Da Wasser mit einer hohen pH-Konzentration in der neunten Einheit 9 für das Wassersediment gespeichert wird, kommt dieses Wasser vom ersten Ausgang der neunten Einheit 9 für das Wassersediment in den Eingang der siebenten Einheit 7 für das Wassersediment an. In der siebenten Einheit 7 für das Wassersediment läuft die Sedimentation der Dispersionsteilchen der sodahaltigen Substanz. Wenn das Wasser die obere Ebene des Wasserstands in der siebenten Einheit 7 für das Wassersediment erreicht, werden Informationen von ihrem Informationsschaltausgang in den zweiten Informationsschalteingang der ersten Einheit 1 für die Niveauautomatik und Programmsteuerung übertragen. Diese Einheit befiehlt als Antwort dem vierten Informationsschaltausgang die Aktivierung der achten Einheit 8 für die Wasserableitung mit einer pH-Konzentration von mehr als 7,8. Vom zweiten Ausgang der siebenten Einheit 7 für das Wassersediment kommt das Wasser mit einer hohen pH-Konzentration in den Eingang der achten Einheit 8 für die Wasserableitung mit einer pH-Konzentration von mehr als 7,8 und kommt danach von ihrem Ausgang im Eingang des Belüftungskanals 6 an.
- Wenn das Wasser die untere Ebene des Wasserstands in der siebenten Einheit 7 für das Wassersediment erreicht, werden Informationen darüber von ihrem Informationsschaltausgang in den zweiten Informationsschalteingang der ersten Einheit 1 für die Niveauautomatik und Programmsteuerung übertragen. Diese gibt ihrerseits einen Befehl vom vierten Informationsschaltausgang der ersten Einheit 1 für die Niveauautomatik und Programmsteuerung, um die achte Einheit 8 zur Wasserableitung mit einer pH-Konzentration von mehr als 7,8 abzuschalten. Vom Informationsschaltausgang des Belüftungskanals 6 kommen Informationen über den pH-Wert des Wassers in den ersten Informationsschalteingang der ersten Einheit 1 für die Niveauautomatik und Programmsteuerung. Beim Erreichen des Sollwerts des Wasser-pH-Werts im Belüftungskanal 6 gibt die erste Einheit 1 für die Niveauautomatik und Programmsteuerung vom vierten Informationsschaltausgang einen Befehl an den Informationsschalteingang der achten Einheit 8 für die Wasserableitung mit einer pH-Konzentration von mehr als 7,8 und an den Informationsschalteingang der zehnten Einheit 10 für die Wasserversorgung mit einer pH-Konzentration von weniger als 7,05, um deren Betrieb zu halten. Vom zweiten Informationsschaltausgang der ersten Einheit 1 für die Niveauautomatik und Programmsteuerung empfängt der Informationsschalteingang des Förderers 3 auch einen Befehl über das Betriebshalten. Vom Informationsschaltausgang der neunten Einheit 9 für das Wassersediment und vom Informationsschaltausgang der siebenten Einheit 7 für das Wassersediment kommen Informationen über die Höhe des Sediments am Boden des jeweiligen Behälters auf dem zweiten Informationsschalteingang der ersten Einheit 1 für die Niveauautomatik und Programmsteuerung an.
- Wenn der kritische Wert der oberen Ebene der Sedimentfraktionen in der neunten Einheit 9 für das Wassersediment erreicht wird, wird ein Befehl vom ersten Informationsschaltausgang der ersten Einheit 1 für die Niveauautomatik und Programmsteuerung auf den Informationsschalteingang des Verschlusses 14 über seine Öffnung und dementsprechend auf den Informationsschalteingang der zwölften Einheit 12 für die Sedimentfraktionsbewegung über ihr Einschalten gegeben. Dabei kommen die Sedimentfraktionen aus dem zweiten Ausgang der neunten Einheit 9 für das Wassersediment in den Eingang des Verschlusses 14. Danach werden diese Sedimentfraktionen von seinem Ausgang dem Eingang der zwölften Einheit 12 für die Sedimentfraktionsbewegung zugeführt. Die Abschaltung der zwölften Einheit 12 für die Sedimentfraktionsbewegung und das Schließen des Verschlusses 14 erfolgt auf Befehl des ersten Informationsschaltausgangs der ersten Einheit 1 für die Niveauautomatik und Programmsteuerung, der dem Informationsschalteingang der zwölften Einheit 12 für die Sedimentfraktionsbewegung und dem Informationsschalteingang des Verschlusses 4 zugeführt wird, der mit der ersten Einheit 1 für die Niveauautomatik und Programmsteuerung auf der Grundlage der Informationen über den kritischen Wert der unteren Ebene der Sedimentfraktionen in der neunten Einheit 9 für das Wassersediment erarbeitet wird.
- Wenn der kritische Wert der oberen Ebene der Sedimentfraktion in der siebenten Einheit 7 für das Wassersediment erreicht wird, wird ein Befehl vom Informationsschaltausgang der ersten Einheit 1 für die Niveauautomatik und Programmsteuerung auf den Informationsschalteingang des Verschlusses 13 über seine Öffnung und jeweils auf den Informationsschalteingang der zwölften Einheit 12 für die Sedimentfraktionsbewegung über ihr Einschalten gegeben. In diesem Fall kommen die Sedimentfraktionen aus dem Ausgang der siebenten Einheit 7 für das Wassersediment im Eingang des Verschlusses 13 an. Danach kommen die oben genannten Sedimentfraktionen im Eingang der zwölften Einheit 12 für die Sedimentfraktionsbewegung an. Die Betriebseinstellung der zwölften Einheit 12 für die Sedimentfraktionsbewegung und das Schließen des Verschlusses 13 werden durch einen Befehl vom ersten Informationsschaltausgang der ersten Einheit 1 für die Niveauautomatik und Programmsteuerung auf den Informationsschalteingang der zwölften Einheit 12 für die Sedimentfraktionsbewegung und auf den Informationsschalteingang des Verschlusses 13 ausgelöst, der auf der Information über das Erreichen des kritischen Werts der unteren Ebene der Sedimentfraktionen in der siebenten Einheit 7 für das Wassersediment basiert. Wenn der kritische Wert der oberen Ebene der Sedimentfraktionen in der neunten Einheit 9 für das Wassersediment und in der siebenten Einheit 7 für das Wassersediment gleichzeitig erreicht ist, wird der Reinigung der siebenten Einheit 7 für das Wassersediment der Vorrang gegeben. Bei der Reinigung der Vorrichtung für die Sedimentfraktionen aus dem Ausgang der zwölften Einheit 12 für die Sedimentfraktionsbewegung werden die Sedimentfraktionen dem Eingang der elften Einheit 11 für die Sedimentfraktionsentfernung zugeführt, und aus deren Ausgang werden sie zur Entsorgung gebracht.

### Beispiel 1

In den Becken der Anlage mit geschlossener Wasserversorgung gibt es 312.500 kg russischen Stör; etwa 4,5 kg. Täglich werden 2500 kg extrudiertes Futter in die Becken zur Fütterung des Störs eingebracht. Um Veränderungen der Wasserparameter auf der sauren Seite (die sich aus dem Leben der Bakterien im Biofilter ergeben) auszugleichen, wird täglich eine sodahaltige Substanz ins Wasser der Becken eingeführt. Die Wassertemperatur in den Becken AGW wird auf dem Niveau von 25°C gehalten. Der aktuelle pH-Wert des Wassers beträgt 6,93. Die Konzentration von Ammoniak im Wasser der Becken überschreitet 0,014 mg/l nicht. Die Dauer der weichen Korrektur des Wassers-pH-Werts von 6,93 auf den Wert von 7,05 betrug 85 Minuten. Das Gewicht der sodahaltigen Substanz, die in die Becken eingeführt wurde, betrug 280 kg. Insgesamt befanden sich im Behälter der Einheit 2 für trockene sodahaltige Substanz 800 kg trockene sodahaltige Substanz.

Der Wasser-pH-Wert im Belüftungskanal 6 der vorliegenden Vorrichtung lag unterhalb des kritischen Werts und der Gehalt der Trockensubstanz oberhalb des unteren zulässigen Niveaus in der zweiten Einheit 2 für die trockene sodahaltige Substanz. In diesem Fall wird die zehnte Einheit 10 für die Wasserversorgung mit einer pH-Konzentration von weniger als 7,05 eingeschaltet. Vom Ausgang des Belüftungskanals 6 durch den Eingang und dann durch den Ausgang der zehnten Einheit 10 für die Wasserversorgung mit einer pH-Konzentration von weniger als 7,05 wird das Wasser dem Eingang der fünften Einheit 5 zur Lösung der sodahaltigen Substanz zugeführt. Vom Ausgang der zweiten Einheit 2 für die trockene sodahaltige Substanz kommt trockene sodahaltige Substanz in den Eingang des Förderers 3 ein, der diese trockene sodahaltige Substanz von seinem Ausgang in den Eingang der fünften Einheit 5 zur Lösung der sodahaltigen Substanz liefert. Die Umwälzpumpe 4 vom ersten Ausgang der fünften Einheit 5 zur Lösung der sodahaltigen Substanz nimmt durch ihren Eingang das Wasser mit einer niedrigen pH-Konzentration und gleichzeitig Teilchen der sodahaltigen Substanz auf. Dann führt die Umwälzpumpe 4 durch ihren Ausgang das oben genannte Gemisch dem zweiten Eingang der fünften Einheit 5 zur Lösung der sodahaltigen Substanz zu. Während des kontinuierlichen Wasserpumpens kommt es zu einer schnellen Lösung der sodahaltigen Substanz in dem gepumpten Wasser. Gemäß dem Verlauf des oben genannten Prozesses kommt die Information über die Konzentration der sodahaltigen Substanz im Wasser kontinuierlich von der fünften Einheit zur Lösung der sodahaltigen Substanz, genauer gesagt von ihrem Informationsschaltausgang, auf dem zweiten Informationsschalteingang der ersten Einheit 1 für die Niveauautomatik und Programmsteuerung an. Beim Erreichen einer Konzentration von 10 % der sodahaltigen Substanz im Wasser in der fünften Einheit 5 zur Lösung der sodahaltigen Substanz kommt ein Befehl über das Halten vom zweiten Informationsschaltausgang der ersten Einheit 1 für die Niveauautomatik und Programmsteuerung auf den Informationsschalteingang des Förderers 3 an. Im Fall der Verdünnung der sodahaltigen Substanz im Wasser bis 8 % kommt ein Befehl in die fünfte Einheit 5 zur Lösung der sodahaltigen Substanz auf dem Informationsschalteingang des Förderers 3 vom zweiten Informationsschaltausgang der ersten Einheit 1 für die Niveauautomatik und Programmsteuerung an, um den Arbeitsförderer 3 einzuschalten. In diesem Fall wird der Prozess der Wasserversorgung mit einer niedrigen pH-Konzentration durch die zehnte Einheit 10 für die Wasserversorgung mit einer pH-Konzentration von weniger als 7,05 fortgesetzt. Das Wasser mit einer hohen pH-Konzentration wird aus dem zweiten Ausgang der fünften Einheit 5 zur Lösung der sodahaltigen Substanz in den ersten Eingang der neunten Einheit 9 für das Wassersediment geliefert. Es sollte angemerkt werden, dass die neunte Einheit 9 für das Wassersediment eine Pufferfunktion ausführt, um große Fraktionen der sodahaltigen Substanz zu entfernen, die zuvor nicht aufgelöst wurden, und gleichzeitig verschiedene Fremdkörper (die Abfall sind). Da Wasser mit einer hohen pH-Konzentration in der neunten Einheit 9 für das Wassersediment gespeichert wird, wird dieses Wasser vom ersten Ausgang dem Eingang der siebenten Einheit 7 für das Wassersediment zugeführt. In der siebenten Einheit 7 für das Wassersediment erfolgt die Sedimentation der Dispersionsteilchen der sodahaltigen Substanz. Wenn das Wasser die höchste Wasserebene in der siebenten Einheit für das Wassersediment erreicht, wird eine Information von ihrem Informationsschaltausgang dem zweiten Informationsschalteingang der ersten Einheit 1 für die Niveauautomatik und Programmsteuerung zugeführt. Diese Einheit erarbeitet und gibt den Befehl der Aktivierung der achten Einheit 8 für die Wasserableitung mit einer pH-Konzentration von mehr als 7,8. Vom Ausgang der siebenten Einheit 7 für das Wassersediment kommt das Wasser mit einer hohen pH-Konzentration in den Eingang der achten Einheit 8 für die Wasserableitung mit einer pH-Konzentration von mehr als 7,8 an. Danach wird dieses Wasser von ihrem Ausgang dem Eingang des Belüftungskanals 6 zugeführt. Nach dem Erreichen des Wassers der unteren Ebene des Wasserstands in der siebenten Einheit 7 für das Wassersediment werden von diesem Informationsschaltausgang Informationen über dieses Ereignis in den zweiten Informationsschalteingang der ersten Einheit 1 für die Niveauautomatik und Programmsteuerung übertragen. Und diese Einheit wiederum erarbeitet und gibt den Befehl vom vierten Informationsschaltausgang in den Informationsschalteingang der achten Einheit 8 für die Wasserableitung mit einer pH-Konzentration von mehr als 7,8 über ihre Abschaltung. Vom Informationsschaltausgang des Belüftungskanals 6 kommen Informationen über den pH-Wert des darin befindlichen Wassers zum ersten Informationsschalteingang der ersten Einheit 1 für die Niveauautomatik und Programmsteuerung. Beim Erreichen des Sollwerts des Wasser-pH- Werts im Belüftungskanal 6 gibt die erste Einheit 1 für die Niveauautomatik und Programmsteuerung einen Befehl über das Betriebshalten und überträgt diesen durch ihre Informationsschaltausgänge in den Informationsschalteingang der achten Einheit 8 für die Wasserableitung mit einer pH-Konzentration von mehr als 7,8, in den Informationsschalteingang der zehnten Einheit 10 für die Wasserversorgung mit einer pH-Konzentration von weniger als 7,05 und in den Informationsschalteingang des Förderers 3.

Der so weich wiederhergestellte pH-Wert des Wassers führt nicht zur Stressbildung im gezüchteten russischen Stör. Das fördert eine relativ schnelle Zucht und reduziert deutlich den Abfall (Todesfälle) der Wasserorganismen bei ihrer gewerblichen Zucht. Das wird durch Vergleichstests mit der Prototypvorrichtung bestätigt, die in der Tabelle 2 gezeigt sind.

**Tabelle 2**

| Nr. | Vorrichtungsbenennung | Typ von Wasserorganismen | Prozentsatz des Todes von gezüchteten Wasserorganismen auf ihren Ausgangswert beim Besatz | | | | | |
|---|---|---|---|---|---|---|---|---|
| | | | 30 Tage | 60 Tage | 90 Tage | 120 Tage | 180 Tage | 210 Tage |
| *1* | *2* | *3* | *4* | *5* | *6* | *7* | *8* | *9* |
| *1* | *2* | *3* | *4* | *5* | *6* | *7* | *8* | *9* |
| 1 | Vorliegende Vorrichtung | Russischer Stör | 1,24 | 1,29 | 2,35 | 3,11 | 3,84 | 4,28 |
| 2 | Prototypvorrichtung | Russischer Stör | 4,34 | 4,77 | 7,99 | 13,22 | 15,44 | 17,08 |

Wie aus den Ergebnissen der Vergleichstests mit der Prototypvorrichtung, die in der Tabelle . 2 dargestellt sind, folgt, gewährleistet die vorliegende Vorrichtung das Erreichen des erklärten technischen Ergebnisses.

### Beispiel 2

In den Becken befinden sich 112.500 kg Regenbogenforellen mit einem Gewicht von jeweils ca. 0,5 kg/Forelle. Täglich werden 1800 kg extrudiertes Futter in die Becken gefüllt. Um Veränderungen des Wassers auf die saure Seite auszugleichen (die durch die Bakterientätigkeit im Biofilter entstehen), wird eine sodahaltige Substanz täglich in das Wasser gegeben. Die Wassertemperatur in den Becken beträgt 16°C. Der aktuelle pH-Wert des Wassers beträgt 6,94. Die Konzentration von Ammoniak im Wasser unter diesen Bedingungen übersteigt 0,009 mg/l nicht. Die Zeit für die weiche Korrektur des pH-Werts des Wassers vom Wert von 6,94 auf den Wert von 7,05 betrug 105 Minuten. Die Menge der eingebrachten sodahaltigen Substanz betrug 208 kg. In dem Behälter für die trockene sodahaltige Substanz in der zweiten Einheit 2 befanden sich 450 kg der trockenen sodahaltigen Substanz.

Vom Ausgang der zweiten Einheit 2 für die trockene sodahaltige Substanz wird trockene sodahaltige Substanz dem Eingang des Förderers 3 zugeführt, der diese trockene sodahaltige Substanz von seinem Ausgang an den ersten Eingang der fünften Einheit 5 zur Lösung der sodahaltigen Substanz liefert. Die Umwälzpumpe 4 nimmt vom ersten Ausgang der fünften Einheit 5 zur Lösung der sodahaltigen Substanz über ihren Eingang das Wasser mit einer niedrigen pH-Konzentration und ungelöste Teilchen der sodahaltigen Substanz auf. Dann wird durch ihren Ausgang das entstandene Gemisch in den Eingang der fünften Einheit 5 zur Lösung der sodahaltigen Substanz geliefert. Im Ergebnis wird während des kontinuierlichen Abpumpens des genannten Wassers eine schnelle Lösung der sodahaltigen Substanz erreicht. Im Zuge des Vermischens der sodahaltigen Substanz mit Wasser (das auf die intensive Lösung im Wasser der genannten sodahaltigen Substanz folgt) kommt die Information über die Konzentration der sodahaltigen Substanz im Wasser von der fünften Einheit 5 zur Lösung der sodahaltigen Substanz ständig in den zweiten Informationsschalteingang der ersten Einheit 1 für die Niveauautomatik und Programmsteuerung. Beim Erreichen einer Konzentration der sodahaltigen Substanz im Wasser der fünften Einheit 5 zur Lösung der sodahaltigen Substanz von 10 % kommt ein Befehl vom zweiten Informationsschaltausgang der ersten Einheit 1 für die Niveauautomatik und Programmsteuerung auf dem Informationsschalteingang des Förderers 3 über sein Halten an. Bei der Absenkung der Konzentration der sodahaltigen Substanz im Wasser der fünften Einheit 5 zur Lösung der sodahaltigen Substanz auf den Wert von 8% kommt ein Befehl vom zweiten Informationsschaltausgang der ersten Einheit 1 für die Niveauautomatik und Programmsteuerung auf dem Informationsschalteingang des Förderers 3 an, um ihn zu aktivieren. In diesem Fall wird der Prozess der Wasserversorgung mit einer niedrigen pH-Konzentration durch die zehnte Einheit 10 für die Wasserversorgung mit einer pH-Konzentration von weniger als 7,05 fortgesetzt. Das Wasser mit hohem pH-Wert vom ersten Ausgang der fünften Einheit 5 zur Lösung der sodahaltigen Substanz wird dem Eingang der neunten Einheit 9 für das Wassersediment zugeführt. Die neunte Einheit 9 für das Wassersediment führt eine Pufferfunktion aus, die mit dem Entfernen von großen Fraktionen der sodahaltigen Substanz, die nicht im Wasser gelöst wurden, und mit dem Entfernen anderer Fremdkörper (unlösliche Verunreinigungen) aus dem Wasser verbunden ist. Im Zuge der Wasserspeicherung mit einer hohen pH-Konzentration in der neunten Einheit 9 für das Wassersediment kommt dieses Wasser von ihrem Ausgang auf dem Eingang der siebenten Einheit 7 für das Wassersediment an. In der siebenten Einheit 7 für das Wassersediment erfolgt der Sedimentationsprozess von (nicht in Wasser gelösten) Dispersionsteilchen der sodahaltigen Substanz. Wenn das Wasser den oberen Wasserstand in der siebenten Einheit 7 für das Wassersediment erreicht, kommt die Information über dieses Ereignis von ihrem Informationsschaltausgang in dem zweiten Informationsschalteingang der ersten Einheit 1 für die Niveauautomatik und Programmsteuerung an. Diese erste Einheit ihrerseits erarbeitet und liefert von ihrem vierten Informationsschaltausgang einen Befehl über die Aktivierung der achten Einheit 8 für die Wasserableitung mit einer pH-Konzentration von mehr als 7,8. Vom zweiten Ausgang der siebenten Einheit 7 für das Wassersediment kommt das Wasser mit einer hohen pH-Konzentration im Eingang der achten Einheit 8 für die Wasserableitung mit einer pH-Konzentration von mehr als 7,8 an. Dann wird dieses Wasser von ihrem Ausgang dem Eingang des Belüftungskanals 6 zugeführt. Wenn das Wasser die zweite Ebene des unteren Wasserstands 7 erreicht, werden Informationen über dieses Ereignis vom Informationsschaltausgang dieser Einheit auf den zweiten Informationsschalteingang der ersten Einheit 1 für die Niveauautomatik und Programmsteuerung übertragen, die ihrerseits einen Befehl vom vierten Informationsschaltausgang der ersten Einheit 1 für die Niveauautomatik und Programmsteuerung auf den Informationsschalteingang der achten Einheit 8 für die Wasserableitung mit einer pH-Konzentration von mehr als 7,8 über ihre Abschaltung überträgt. Vom Informationsschaltausgang des Belüftungskanals 6 wird kontinuierlich eine Information über den pH-Wert des Wassers dem ersten Informationsschalteingang der ersten Einheit für die Niveauautomatik und Programmsteuerung zugeführt. Beim Erreichen des Sollwerts des Wasser-pH-Werts im Belüftungskanal 6 erarbeitet die erste Einheit für die Niveauautomatik und Programmsteuerung einen Befehl über die Inbetriebsetzung und gibt diesen Befehl vom vierten Informationsschaltausgang an die Informationsschalteingänge der achten Einheit 8 für die Wasserableitung mit einer pH-Konzentration von mehr als 7,8 und an die zehnte Einheit 10 für die Wasserversorgung mit einer pH-Konzentration von weniger als 7,05 und vom zweiten Informationsschaltausgang der ersten Einheit 1 für die Niveauautomatik und Programmsteuerung an den Informationsschalteingang des Förderers 3.

Der demgemäß ruhig wiederhergestellte Wert des pH-Wassers verursacht keinen Stress bei den Regenbogenforellen und fördert so ihre schnelle Zucht, was den Verlust (Todesfälle) der Regenbogenforellen während der Zucht wesentlich reduziert. Letzteres wird durch Vergleichstests mit der angegebenen Prototypvorrichtung in der Tabelle 3 bestätigt.

**Tabelle 3**

| | Vorrichtungsbenennung | Typ der Wasserorganismen | Prozentsatz des Todes von gezüchteten Wasserorganismen auf ihren Ausgangswert beim Besatz | | | | | |
|---|---|---|---|---|---|---|---|---|
| | | | 30 Tage | 60 Tage | 90 Tage | 120 Tage | 180 Tage | 210 Tage |
| 1 | Vorliegende Vorrichtung | Regenbogenforelle | 2,3 | 2,45 | 2,61 | 4,02 | 5,31 | 5,63 |
| 2 | Prototypvorrichtung | Regenbogenforelle | 5,06 | 9,07 | 8,87 | 17,09 | 21,35 | 22,46 |

Wie aus den Ergebnissen von Vergleichstests der vorliegenden Vorrichtung mit dem Prototypgerät, die in Tabelle 3 dargestellt sind, folgt, gewährleistet die vorliegende Vorrichtung (vielfach) das Erreichen des beanspruchten technischen Ergebnisses.

### Beispiel 3

Die Becken der vorliegenden Anlage enthalten 112.500 kg sibirischen Stör von jeweils etwa 1,1 kg. Zur Fütterung des sibirischen Störs in den Becken werden täglich 1600 kg extrudierte Futtermittel eingesetzt. Um Veränderungen des Wasserzustands nach dem pH-Parameter auf die saure Seite (die durch die Bakterientätigkeit im Biofilter bedingt sind) auszugleichen, wird täglich eine sodahaltige Substanz dem Wasser zugesetzt. Die Wassertemperatur in den Becken beträgt 23°C. Der aktuelle pH-Wert des Wassers beträgt 6,95. Die Konzentration von Ammoniak in Wasser überschreitet 0,011 mg/l nicht. Die Zeit für die sanfte Korrektur des Wasser-pH-Werts von 6,95 auf 7,05 betrug 65 Minuten. Das Gewicht der eingebrachten sodahaltigen Substanz betrug 189 kg. Im Behälter für trockene sodahaltige Substanz der zweiten Einheit 2 befanden sich 610 kg der trockenen sodahaltigen Substanz.

Wenn der pH-Wert des Wassers im Belüftungskanal 6 die Ebene des kritischen Werts erreicht und die Ebene der trockenen Substanz oberhalb der unteren zulässigen Ebene in der zweiten Einheit 2 für die trockene sodahaltige Substanz ist, schaltet sich im Betrieb die zehnte Einheit 10 für die Wasserversorgung mit einer pH-Konzentration von weniger als 7,05 ein. Sie nimmt vom Ausgang des Belüftungskanals 6 das Wasser durch ihren Eingang auf und führt dieses Wasser dann dem dritten Eingang der fünften Einheit 5 zur Lösung der sodahaltigen Substanz zu. Dabei kommt die trockene sodahaltige Substanz vom Ausgang der zweiten Einheit 2 für die trockene sodahaltige Substanz im Eingang des Förderers 3 an, der dann diese trockene sodahaltige Substanz von seinem Ausgang an den ersten Eingang der fünften Einheit 5 zur Lösung der sodahaltigen Substanz liefert. Die Umwälzpumpe 4 nimmt das Wasser mit einer niedrigen pH-Konzentration und gleichzeitig Teilchen der darin enthaltenen sodahaltigen Substanz durch ihren Eingang auf und führt dann dieses Gemisch durch ihren Ausgang in den zweiten Eingang der fünften Einheit 5 zur Lösung der sodahaltigen Substanz. Während des kontinuierlichen Abpumpens des Wassers durch die Umwälzpumpe 4 erfolgt eine schnelle Lösung der Teilchen der sodahaltigen Substanz im Wasser. Im Zuge dieses Vermischens und dieser Lösung im Wasser der Teilchen der sodahaltigen Substanz kommt die Information über die Konzentration der sodahaltigen Substanz im Wasser ständig vom Informationsschaltausgang der fünften Einheit 5 zur Lösung der sodahaltigen Substanz am zweiten Eingang der ersten Einheit 1 für die Niveauautomatik und Programmsteuerung an. Beim Erreichen der Konzentration der sodahaltigen Substanz von 10% im Wasser der fünften Einheit 5 zur Lösung der sodahaltigen Substanz kommt ein Befehl vom zweiten Informationsschaltausgang der ersten Einheit 1 für die Niveauautomatik und Programmsteuerung an den Informationsschalteingang des Förderers 3 über das Halten seiner Arbeit. Bei der Verdünnung der sodahaltigen Substanz im Wasser der fünften Einheit 5 zur Lösung der sodahaltigen Substanz auf den Wert von 8 % kommt ein Befehl vom zweiten Informationsschaltausgang der ersten Einheit 1 für die Niveauautomatik und Programmsteuerung auf dem Informationsschalteingang des Förderers 3 über seine Aktivierung an. In diesem Fall wird der Prozess fortgesetzt, das Wasser mit der niedrigen pH-Konzentration durch die zehnte Einheit 10 für die Wasserversorgung mit einer pH-Konzentration von weniger als 7,05 zuzuführen. Das Wasser mit einer hohen pH-Konzentration wird vom zweiten Ausgang der fünften Einheit 5 zur Lösung der sodahaltigen Substanz dem Eingang der neunten Einheit 9 für das Wassersediment zugeführt. Die neunte Einheit für das Wassersediment führt eine Pufferfunktion aus, um große Anteile der sodahaltigen Substanz (die nicht in Wasser gelöst wird) und andere Fremdkörper (fremdwasserunlösliche Abfälle) zu entfernen. Wenn das Wasser mit einer hohen pH-Konzentration die neunte Einheit 9 für das Wassersediment erreicht, kommt dieses Wasser vom Ausgang der neunten Einheit 9 im Eingang der siebenten Einheit 7 für das Wassersediment an. In der siebenten Einheit 7 für das Wassersediment erfolgt auch die Sedimentation der wasserunlöslichen Teilchen der sodahaltigen Substanz. Wenn das Wasser die obere Ebene des Wasserstands in der siebenten Einheit 7 für das Wassersediment erreicht, kommt die Information darüber vom Informationsschaltausgang dieser Einheit auf dem zweiten Informationsschalteingang der ersten Einheit 1 für die Niveauautomatik und Programmsteuerung an. Die erste Einheit 1 für die Niveauautomatik und Programmsteuerung überträgt einen Befehl vom vierten Informationsschaltausgang wiederum an den Informationsschalteingang der achten Einheit 8 für die Wasserableitung mit einer pH-Konzentration von mehr als 7,8 über ihr Einschalten. Vom zweiten Ausgang der siebenten Einheit 7 für das Wassersediment kommt das Wasser mit einer hohen pH-Konzentration in dem Eingang der achten Einheit 8 für die Wasserableitung mit einer pH-Konzentration von mehr als 7,8 an und wird dann von ihrem Ausgang dem Eingang des Belüftungskanals 6 zugeführt. Wenn das Wasser die untere Ebene des Wasserstands in der siebenten Einheit 7 für das Wassersediment erreicht, kommt die Information über dieses Ereignis vom Informationsschaltausgang dieser Einheit im zweiten Informationsschalteingang der ersten Einheit 1 für die Niveauautomatik und Programmsteuerung an, der ihrerseits einen Befehl über die Abschaltung der achten Einheit 8 für die Wasserableitung mit einer pH-Konzentration von mehr als 7,8 überträgt, die von ihrem vierten Informationsschaltausgang in den Informationsschalteingang der achten Einheit 8 für die Wasserableitung mit einer pH-Konzentration von mehr als 7,8 ankommt. Vom Informationsschaltausgang des Belüftungskanals 6 kommen ständig die Informationen über den pH-Wert des Wassers im ersten Informationsschalteingang der ersten Einheit 1 für die Niveauautomatik und Programmsteuerung an. Beim Erreichen des Soll-pH-Werts des Wassers im Belüftungskanal 6 gibt die erste Einheit 1 für die Niveauautomatik und Programmsteuerung vom vierten Informationsschaltausgang der ersten Einheit 1 für die Niveauautomatik und Programmsteuerung einen Befehl an den Informationsschalteingang der achten Einheit 8 für die Wasserableitung mit einer pH-Konzentration von mehr als 7,8 über das Halten ihres Betriebs. Vom vierten Informationsschaltausgang der ersten Einheit 1 für die Niveauautomatik und Programmsteuerung wird ein Befehl an den Informationsschalteingang der zehnten Einheit 10 für die Wasserversorgung mit einer pH-Konzentration von weniger als 7,05 gegeben, um ihren Betrieb zu halten. Vom zweiten Informationsschaltausgang der ersten Einheit 1 für die Niveauautomatik und Programmsteuerung wird ein Befehl an den Informationsschalteingang des Förderers 3 über das Halten seines Betriebs gegeben. So wird der pH-Wert des Wassers in den Becken ruhig wiederhergestellt, und die Stressbildung im sibirischen Stör kann ausgeschlossen werden. Dadurch wird seine schnelle Zucht wesentlich gefördert und gleichzeitig der Verlust (Todesfälle) dieser Wasserorganismen während der Zucht reduziert. Letzteres wird durch Vergleichstests mit der angegebenen Prototypvorrichtung in der Tabelle 4 bestätigt.

**Tabelle 4**

| Nº | Vorrichtungsbenennung | Typ der Wasserorganismen | Prozentsatz des Todes von gezüchteten Wasserorganismen auf ihren Ausgangswert beim Besatz | | | | | |
|---|---|---|---|---|---|---|---|---|
| | | | 30 Tage | 50 Tage | 90 Tage | 120 Tage | 180 Tage | 210 Tage |
| 1 | Vorliegende Vorrichtung | Sibirischer Osseter | 2,82 | 3,23 | 3,72 | 3,98 | 4,11 | 4,76 |
| 2 | Prototypvorrichtung | Sibirischer Osseter | 3,60 | 11,79 | 12,65 | 16,92 | 15,95 | 19,09 |

Wie aus den Ergebnissen von Vergleichstests der vorliegenden Vorrichtung mit dem Prototypgerät, die in Tabelle 4 dargestellt sind, folgt, dass die vorliegende Vorrichtung (vielfach) das Erreichen des beanspruchten technischen Ergebnisses gewährleistet.

Zur Wiedergabe der vorliegenden Vorrichtung können bekannte Materialien, Baugruppen und Mechanismen benutzt werden.

### Bezugszeichenliste

- 1: Einheit für Niveauautomatik und Programmsteuerung
- 2: Einheit für trockene sodahaltige Substanz
- 3: Förderband
- 4: Umwälzpumpe
- 5: Einheit für Lösung der sodahaltigen Substanz
- 6: Belüftungskanal
- 7: Zweite Einheit für Wassersediment
- 8: Einheit für Wasserableitung mit der pH-Konzentration mehr als 7,8
- 9: Erste Einheit für das Wassersediment
- 10: Einheit für die Wasserversorgung mit einer pH-Konzentration von weniger als 7,05
- 11: Einheit für Sedimententfernung
- 12: Einheit für Sedimentfraktionenbewegung
- 13: Erster Verschluss
- 14: Zweiter Verschluss

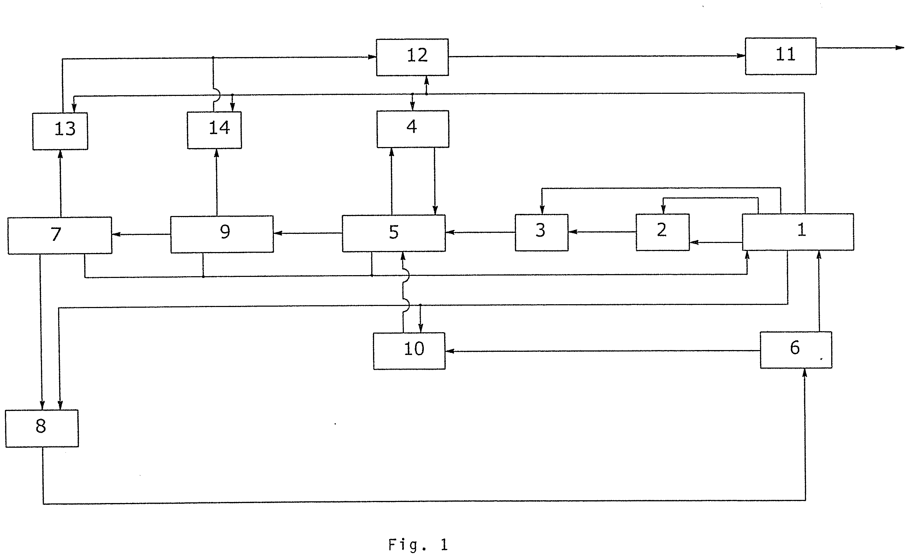

## Patentansprüche

1. Vorrichtung zur Stabilisierung des Wasser-pH-Werts bei der Züchtung von Wasserorganismen in geschlossenen Wasserversorgungssystemen während der Zucht von Wasserorganismen in geschlossenen Wasserversorgungsanlagen, wobei diese Vorrichtung folgende Einheiten aufweist:
- eine erste Einheit (1) für die Niveauautomatik und Programmsteuerung einschließlich eines IBM-kompatiblen Computers mit auf diesem installierten Computerprogramm für EDV "Programm zur Regelung von Wasserparametern in GWA", wobei diese erste Einheit (1) einen ersten, zweiten, dritten und vierten Informationsschaltausgang sowie einen ersten, zweiten und dritten Informationsschalteingang hat,
- eine zweite Einheit (2) für einen trockenen Sodastoff, der ein Ausgang sowie ein erster und zweiter Informationseingang zugeordnet sind,
- eine Fördereinheit (3) mit einem Eingang, einem Ausgang und einem Informationsschalteingang,
- eine Umwälzpumpe (4) mit einem Eingang, einem Ausgang und einem Informationsschalteingang,
- eine Einheit (5) zur Lösung eines sodahaltigen Stoffs mit einem ersten, zweiten und dritten Eingang, einem Ausgang und einem Informationsschaltausgang,
- einen Belüftungskanal (6) mit einem Eingang, einem Ausgang und einem Informationsschaltausgang,
- eine siebente Einheit (7) für das Wassersediment mit einem ersten und einem zweiten Ausgang, einem Eingang und einem Informationsschaltausgang,
- eine achte Einheit (8) zur Wasserableitung mit einer pH-Konzentration von mehr als 7,8 mit einem Eingang, einem Ausgang und einem Informationsschalteingang,
- eine neunte Einheit (9) für das Wassersediment mit einem Eingang, einem ersten und einem zweiten Ausgang und einem Informationsschaltausgang,
- eine zehnte Einheit (10) für die Wasserversorgung mit einer pH-Konzentration von weniger als 7,05 mit einem Eingang, einem Ausgang und einem Informationsschalteingang,
- eine elfte Einheit (11) zur Sedimententfernung mit einem Eingang und einem Ausgang,
- eine zwölfte Einheit (12) zur Sedimentfraktionsbewegung mit einem Eingang, einem Ausgang und einem Informationsschalteingang,
- einen ersten Verschluss (13) mit einem Eingang, einem Ausgang und einem Informationsschalteingang,
- einen zweiten Verschluss (14) mit einem Eingang, einem Ausgang und einem Informationsschalteingang,
und dass dabei
- der erste Informationsschaltausgang der ersten Einheit (1) für die Niveauautomatik und Programmsteuerung mit den Informationsschalteingängen der Umwälzpumpe (4), der zwölften Einheit (12) zur Sedimentfraktionsbewegung, dem ersten Verschluss (13) und dem zweiten Verschluss (14) verbunden ist,
- der zweite Informationsschaltausgang der ersten Einheit (1) für die Niveauautomatik und Programmsteuerung mit dem Informationsschalteingang des Förderers (3) verbunden ist,
- der dritte Informationsschaltausgang der ersten Einheit (1) für die Niveauautomatik und Programmsteuerung mit dem Informationsschalteingang der zweiten Einheit (2) für die trockene sodahaltige Substanz verbunden ist,
- der vierte Informationsschaltausgang der ersten Einheit (1) für die Niveauautomatik und Programmsteuerung mit den Informationsschalteingängen der achten Einheit (8) für die Wasserableitung mit einer pH-Konzentration von mehr als 7,8 und der zehnten Einheit (10) für die Wasserversorgung mit einer pH-Konzentration von weniger als 7,05 verbunden ist,
- der erste Informationsschalteingang der ersten Einheit (1) für die Niveauautomatik und Programmsteuerung mit dem Informationsschaltausgang des Belüftungskanals (6) verbunden ist,
- der zweite Informationsschalteingang der ersten Einheit (1) für die Niveauautomatik und Programmsteuerung mit den Informationsschaltausgängen der fünften Einheit (5) zur Lösung der sodahaltigen Substanz, der siebenten Einheit (7) für das Wassersediment und der neunten Einheit (9) für das Wassersediment verbunden ist,
- der dritte Informationsschalteingang der ersten Einheit (1) für die Niveauautomatik und Programmsteuerung mit dem Informationsschaltausgang der zweiten Einheit (2) für trockene Substanz verbunden ist,
- der Ausgang der zweiten Einheit (2) für trockene sodahaltige Substanz mit dem Eingang des Förderers (3) verbunden ist,
- der Ausgang des Förderers (3) mit dem ersten Eingang der fünften Einheit (5) zur Lösung der sodahaltigen Substanz verbunden ist,
- der zweite Eingang der fünften Einheit (5) zur Lösung der sodahaltigen Substanz mit dem Ausgang der Umwälzpumpe (4) verbunden ist,
- der dritte Eingang der fünften Einheit (5) zur Lösung der sodahaltigen Substanz mit dem Ausgang der zehnten Einheit (10) für die Wasserversorgung mit einer pH-Konzentration von weniger als 7,05 verbunden ist, deren Eingang mit dem Ausgang des Belüftungskanals (6) verbunden ist,
- der erste Ausgang der fünften Einheit (5) zur Lösung der sodahaltigen Substanz mit dem Eingang der Umwälzpumpe (4) verbunden ist und
- der zweite Ausgang der fünften Einheit (5) zur Lösung der sodahaltigen Substanz mit dem Eingang der neunten Einheit (9) für das Wassersediment verbunden ist, deren Ausgang mit dem Eingang der siebenten Einheit (7) für das Wassersediment verbunden ist,
- der erste Ausgang der siebenten Einheit (7) für das Wassersediment mit dem Eingang des ersten Verschlusses (13) verbunden ist,
- der zweite Ausgang der siebenten Einheit (7) für das Wassersediment mit dem Eingang der achten Einheit (8) zur Wasserableitung mit einer pH-Konzentration von mehr als 7,8 verbunden ist,
- und ihr Ausgang mit dem Eingang des Belüftungskanals 6 verbunden ist,
- der Ausgang des ersten Verschlusses (13) mit dem Eingang des zweiten Verschlusses (14) und dem Eingang der zwölften Einheit (12) zur Sedimentfraktionsbewegung verbunden ist, deren Ausgang mit dem Eingang der elften Einheit (11) zur Sedimentfraktionsentfernung verbunden ist, während ihr Ausgang auf die Entsorgung gerichtet ist.
